Europäisches Patentamt

European Patent Office

Office européen des brevets

(19)

(11) Numéro de publication: **0 468 366 A1**

# (12) DEMANDE DE BREVET EUROPEEN

(21) Numéro de dépôt: **91112024.4**

(22) Date de dépôt: **18.07.91**

(51) Int. Cl.⁵: **G01S 13/02**

(30) Priorité: **23.07.90 FR 9009380**

(43) Date de publication de la demande:
**29.01.92 Bulletin 92/05**

(84) Etats contractants désignés:
**AT BE CH DE DK ES FR GB IT LI NL SE**

(71) Demandeur: **ALCATEL BUSINESS SYSTEMS**
**12, rue de la Baume**
**F-75008 Paris(FR)**

(72) Inventeur: **Thomas, Gérard**
**33, rue des Fonds Bleus**
**F-95610 Eragny s/Oise(FR)**
Inventeur: **Oliveros, Alain**
**579, rue de Pater**
**F-82000 Montauban(FR)**

(74) Mandataire: **Weinmiller, Jürgen et al**
**Lennéstrasse 9 Postfach 24**
**W-8133 Feldafing(DE)**

(54) **Système de radio-identification à badges répondeurs, unités constitutives d'un tel système et agencement exploitant correspondant.**

(57) Le système de radio-identification d'êtres ou d'objets munis de badges identificateurs de type répondeur comporte au moins un interrogateur (23), doté d'un émetteur hyperfréquence commandé de manière à émettre un code d'interrogation hyperfréquence, une pluralité de badges d'identification ($0_A$, $0_B$, $0_C$), de type répondeur, utilisant l'énergie transmise par un code d'interrogation hyperfréquence reçu d'un interrogateur pour émettre un code de réponse hyperfréquence individuel transposé du code d'interrogation reçu, au moins un récepteur d'identification (24), apte à décoder par corrélation les codes de réponse hyperfréquence individuels des badges. Le système est prévu incorporé dans un agencement (26) serveur, notamment une installation téléphonique multiservice, exploitant les informations d'identification qu'il fournit.

FIG. 2

L'invention concerne un système de radio-identification d'êtres ou d'objets munis, à cet effet, de badges identificateurs de type répondeur. Elle concerne aussi, d'une part, les unités nécessaires à la constitution d'un tel système, telles qu'en l'occurrence un interrogateur de badges et un récepteur traitant au moins partiellement les réponses fournies par ces badges, en plus de l'unité que constitue chaque badge lui-même, d'autre part, les agencements d'exploitation équipés d'un tel système. L'affectation de badges à des objets ou à des êtres vivants à des fins d'identification est un procédé classiquement appliqué tant directement en contrôle d'accès ou de passage qu'indirectement en contrôle de présence.

Chaque badge présente une caractéristique susceptible d'être prise en compte par un système d'identification approprié, ces caractéristiques étant par exemple de type individuel ou catégoriel. La prise en compte de la caractéristique d'un badge par un système d'identification implique l'usage d'un récepteur d'information avec lequel le badge est amené à communiquer.

Cette communication peut être établie à l'initiative du porteur de badge dans certaines applications, notamment lorsque ce porteur souhaite un accès, elle peut aussi être initialisée automatiquement par le porteur de badge sans que ce dernier n'ait à intervenir spécifiquement, telles sont par exemple les initialisations déclenchées par le seul fait du passage d'un porteur de badge par un accès équipé à cet effet.

Il est classique dans les communications par voie hertzienne et en particulier en radio-localisation de déclencher l'émetteur d'un appareil émetteur-récepteur par envoi d'un signal au récepteur de l'appareil, à partir d'un interrogateur.

Ceci est exploitable avec un émetteur-récepteur réalisé sous forme d'un badge et permet de libérer le porteur du badge de tout souci dans ce domaine de l'établissement de communications, ce qui permet d'affecter de tels badges à des porteurs auxquels aucune responsabilité ne peut être confiée, tels que des objets où des animaux. Le badge doit alors soit comporter sa propre source d'énergie qui lui permet d'émettre vers le ou les récepteurs du système de radio-identification, soit recevoir de l'énergie externe afin de pouvoir émettre pour communiquer.

Pour des raisons techniques et économiques bien connues en matière de radio-émission, tant que cela est possible les émissions des interrogateurs et des badges sont discontinues et ne sont déclenchées que lorsque cela est nécessaire.

L'une des raisons techniques qui conduit à limiter au maximum l'émission des badges est que celle-ci entraîne une consommation d'une énergie qui provient d'une source dont l'état d'épuisement et/ou l'état de dégradation doivent être périodiquement contrôlés, lorsque cette source est incorporée dans les badges.

Or cette contrainte est un inconvénient important dans les systèmes de radio-identification où la responsabilité des porteurs de badge en ce qui concerne le matériel de radio-identification est souvent souhaitée minimale, lorsqu'elle n'est pas effectivement nulle.

Une seconde raison technique conduisant à rechercher une réduction maximale de la durée d'émission des badges est liée à l'encombrement et au parasitage hertziens que seraient susceptibles de causer des émissions longues et/ou simultanées tant au détriment du système de radio-identification concerné qu'à celui de son environnement.

En effet, la longueur des émissions des badges et leur éventuelle simultanéité influent directement sur les capacités d'identification du système de radio-identification les comportant et sur la complexité du ou des récepteur(s) d'identification et du système en général.

La présente invention concerne donc un système de radio-identification d'êtres ou d'objets munis, à cet effet, de badges identificateurs de type répondeur.

Elle concerne aussi, d'une part, les unités nécessaires à la constitution d'un tel système, telles qu'en l'occurrence un interrogateur de badges et un récepteur traitant au moins partiellement les réponses fournies par ces badges, d'autre part, les agencements d'exploitation équipés de ce système.

Selon une caractéristique de l'invention le système de radio-identification d'êtres ou d'objets munis de badges identificateurs comporte au moins un interrogateur doté d'un émetteur hyperfréquence produisant des interrogations constituées chacune par un signal modulé par un code de BARKER, une pluralité de badges d'identification , de type répondeur, exploitant l'énergie transmise par un signal, modulé par un code de BARKER, reçu d'un interrogateur pour émettre chacun un code de réponse hyperfréquence individuel transposé du signal reçu, au moins un récepteur d'identification, apte à décoder par corrélation les codes de réponse hyperfréquence individuels des badges.

L'invention propose aussi un agencement exploitant de type serveur d'application, dont une caractéristique est d'être doté d'un système de radio-identification comportant au moins un interrogateur, ayant un émetteur hyperfréquence produisant des interrogations constituées chacune par un signal modulé par un code de BARKER, une pluralité de badges d'identification, de type répondeur, exploitant l'énergie transmise par un signal, modulé en code de BARKER, reçu d'un interrogateur pour émettre chacun un code de réponse hyperfréquence individuel transposé du signal modulé reçu, au moins un récepteur d'identification, apte à décoder par corrélation les codes de réponse hyperfréquence individuels des badges, ledit agencement exploitant les informations d'identification obtenues par le système de radio-identification qui lui sont fournies par un l'intermédiaire d'un ensemble de commande de ce système, via une liaison de transmission aboutissant à son propre ensemble de commande.

Selon une autre caractéristique de l'invention, l'agencement exploitant est constitué par une installation téléphonique, de type intercommunication ou commutateur numérique à intégration de services, qui reçoit les informations fournies par le système de radio-identification pour connaître en temps réel la localisation d'au moins certains des abonnés téléphoniques desservis par l'installation pour assurer les fonctions de recherche de personne et/ou pour transférer les communications qui leur sont destinées au poste ou terminal téléphonique auprès duquel ces abonnés sont alors localisés.

Selon une autre caractéristique de l'invention, l'agencement exploitant constitué par une installation téléphonique, de type intercommunication ou commutateur numérique à intégration de services, est agencé pour assurer le transfert des facilités spécifiques correspondant à la catégorie d'un abonné de l'installation téléphonique, qui classiquement sont rattachées au poste ou terminal habituel de cet abonné dans l'installation, au poste ou terminal auprès duquel cet abonné est temporairement situé, à l'occasion d'un appel par voie téléphonique pour ou par cet abonné, par combinaison des possibilités des unités de commande du système de radio-identification et de commutation de l'installation téléphonique.

L'invention, ses caractéristiques et ses avantages sont précisés dans la description qui suit, en liaison avec les figures répertoriées ci-dessous.

La figure 1 présente un exemple schématique d'un agencement exploitant un système de radio-identification selon l'invention.

La figure 2 présente un système de radio-identification selon l'invention

La figure 3 présente un schéma de principe du câblage d'adresse d'un badge.

La figure 4 présente un diagramme gradué en niveau d'amplitude en fonction du temps du signal de sortie du corrélateur du récepteur d'identification, suite à une interrogation et en l'absence de réponse d'un badge. La figure 5 présente un diagramme gradué en niveau d'amplitude en fonction du temps du signal de sortie du corrélateur du récepteur d'identification, suite à une interrogation et en cas de réponse d'un badge.

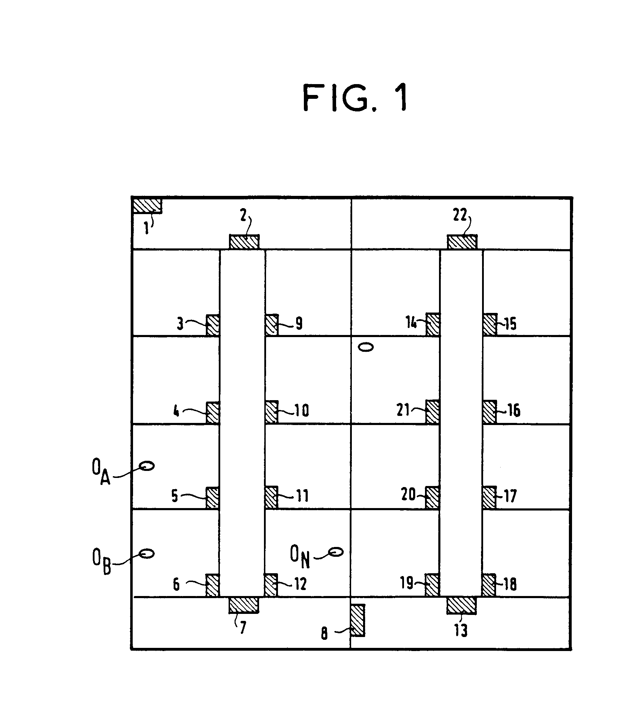

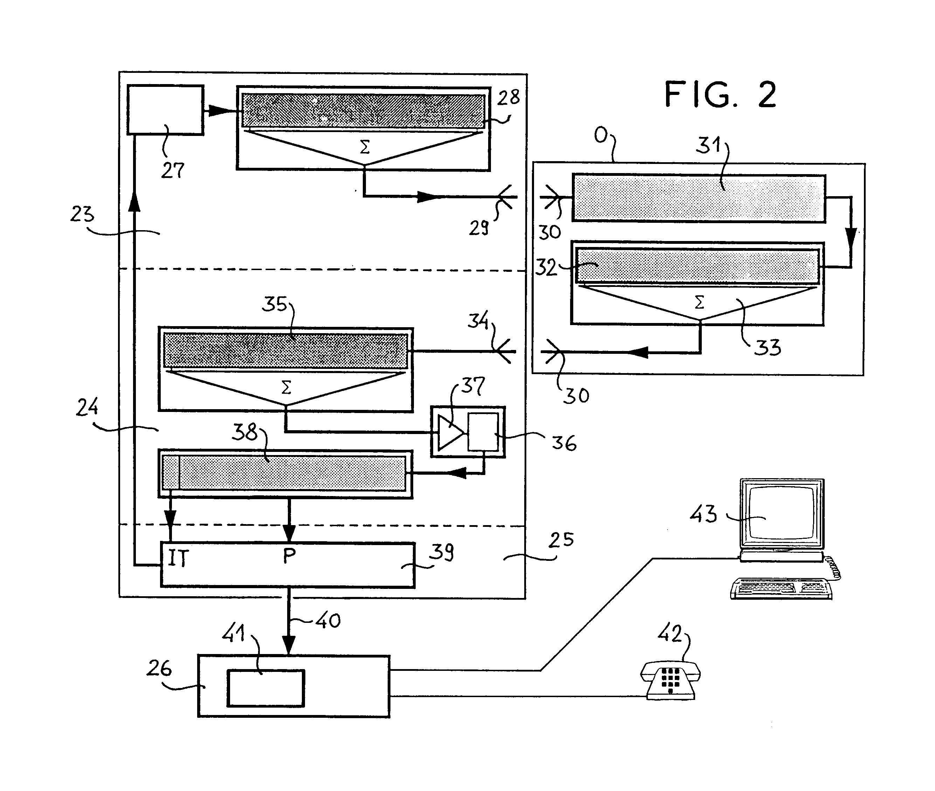

L'agencement montré sur la figure 1 correspond à l'une des possibilités de mise en oeuvre d'un système de radio-identification selon l'invention, qui dans l'exemple choisi est la localisation d'êtres ou d'objets porteurs de badges 0, tels $0_A$, $0_B$, $0_N$ permettant de les identifier, lorsque ces badges sont du type répondeur. A titre d'exemple est figuré un niveau d'un bâtiment fermé, comportant une pluralité de salles accessibles depuis l'extérieur au travers d'un accès référencé 1 et ici présenté unique pour des raisons de simplification. Cet accès aboutit dans une salle communiquant avec un couloir par un accès référencé 2, le couloir communique par des accès individuels référencés 3 à 7 et 9 à 12 avec autant de salles n'ayant chacune qu'un seul accès, sauf celle d'accès 7 qui communique aussi avec une autre salle par un accès 8. Cette autre salle a accès 8 débouche de plus sur un second couloir par un accès 13. Le second couloir communique par des accès individuels référencés 14 à 22 avec autant d'autres salles à un seul accès. Chaque accès évoqué ci-dessus est par exemple équipé d'un radio-identificateur qui porte la même référence que lui et qui est composé d'un interrogateur 21 de badge et d'un récepteur d'identification 24 - voir figure 2 -.

L'interrogateur 23 est ici doté d'un émetteur hyperfréquence commandé de manière à émettre un code d'interrogation hyperfréquence ou éventuellement plusieurs, si besoin est.

L'émission de codes d'interrogation est destinée à permettre l'identification de badges, de type répondeur, qui utilisent ici l'énergie transmise par un code d'interrogation hyperfréquence reçu pour émettre un code de réponse hyperfréquence individuel transposé du code d'interrogation reçu.

Les badges 0 sont classiquement destinés à permettre l'identification individuelle ou catégorielle des êtres ou objets auxquels ils sont affectés et sur lesquels ils sont habituellement placés.

Le récepteur 24 d'un radio-identificateur qui est aussi de type hyperfréquentiel est agencé pour être apte à décoder les codes de réponse hyperfréquence individuels émis par les badges 0 à réception d'une interrogation produite par un interrogateur 23 dans le champ d'action duquel ils sont placés.

Pour éviter les complications qu'entraînent le traitement de réponses simultanées, au niveau du système de radio-localisation et en particulier au niveau des récepteurs d'identification 24, il est possible de limiter les possibilités de réponses simultanées par exemple en limitant de manière précise la zone d'émission-réception d'un radio-identificateur.

Dans le cas de l'agencement présenté à la figure 1, ceci peut aisément être obtenu par limitation du passage à un seul porteur de badge 0 à la fois au niveau d'un radio-identificateur, par exemple par des moyens physiques et par choix approprié du faisceau émetteur des interrogateurs et de du secteur de réceptivité efficace des récepteurs d'identification, selon des techniques bien connues de l'homme de métier.

Un ensemble de commande 25, organisé autour d'au moins un processeur 39 et d'auxiliaires, notamment de mémoires, permet d'exploiter les informations d'identification de badges 0 fournies par un ou plusieurs radio-identificateurs, selon des techniques qui ne seront pas développées ici et qui permettent par exemple de connaître l'identité d'un porteur de badge,lorsque celui-ci passe dans le champ d'action d'un radio-identificateur et par conséquent de le localiser au fur et à mesure de ces déplacements, notamment si ce porteur passe successivement dans les zones d'action individuelles d'au moins deux radio-localisateurs dans l'exemple d'application évoqué en relation avec la figure 1. A cet effet, les informations nécessaires à la localisation d'un badge sous surveillance sont mémorisées, par exemple dans une mémoire d'unité de commande du système de radio-identification ou d'un agencement auquel est incorporé ce système, après avoir été obtenues de celles fournies par les radio-identificateurs dans le champ d'action desquels ce badge est passe.

L'emploi de moyens détecteurs de sens de passage associés à un radio-identificateur peut également permettre une localisation au moins approchée d'un porteur de badge 0 à l'aide d'un seul radio-identificateur, si besoin est. Ceci peut-être obtenu par divers moyens par exemple par association de deux barrières lumineuses et notamment infrarouges de part et d'autre de la partie centrale de la zone d'action d'un radio-identificateur, l'ordre de franchissement des barrières communiqué à l'ensemble de commande 25 concerné permettant à celui-ci d'obtenir l'information de localisation recherchée, par un procédé banal prenant ici en compte les passages, qui ne sera pas développé ici, la dernière passée de deux barrières franchies par un porteur de badge indiquant le coté où se trouve alors ce porteur.

Dans une variante de réalisation, le système de radio-identification est combiné à un agencement 26 serveur d'application apte à exploiter les informations d'identification, de passage et/ou de localisation pour ses besoins propres, l'ensemble de commande 25 du système étant directement ou indirectement relié à un ensemble de commande 41, organisé autour d'au moins un processeur, de l'agencement serveur par au moins une liaison de transmission 40 d'un type approprié usuel.

L'agencement serveur 26 est par exemple une installation de télécommunication de type intercommunication ou commutateur numérique à intégration de services recevant les informations fournies par le système de radio-identification de manière à connaître en temps réel la localisation d'au moins certains des abonnés téléphoniques qu'elle dessert pour assurer les fonctions classiquement assurées par les systèmes de recherche de personne et/ou pour transférer les communications qui leur sont destinées au poste ou terminal téléphonique 42 ou 43 auprès duquel ils sont alors placés.

De plus dans la mesure où ces abonnés sont susceptibles de disposer de facilités spécifiques correspondant à la catégorie qui leur est attribuée et qui classiquement est rattachée à leur poste ou terminal habituel dans une installation qui les dessert, la combinaison évoquée ci-dessus d'un système de radio-identification et d'une installation de télécommunication permet de transférer automatiquement au poste ou terminal auprès duquel un abonné est temporairement situé les facilités auquel il a droit de par sa catégorie. Les processus permettant de tels suivis d'abonnés et de tels transferts de facilité implique la mise en oeuvre de procédures le plus souvent élaborées sous forme logicielle qui relèvent des connaissances habituelles de l'homme de métier du domaine des télécommunications et qui ne seront donc pas développées ici, n'ayant qu'un rapport très indirect avec la présente invention. La figure 2 permet aussi de définir la constitution des unités caractéristiques d'un exemple de système de radio-identification selon l'invention.

L'interrogateur 23 d'un radio-identificateur du système proposé comporte essentiellement un émetteur hyperfréquence dont la fréquence d'émission ici fixe qui est fournie par un générateur d'excitation 27, travaillant dans la bande d'exploitation des ondes de surface et à titre d'exemple non exclusif à une fréquence d'environ 2 GHz.

Le générateur 27 attaque un corrélateur 28 constitué à l'aide d'un filtre en peigne réalisé sous la forme d'un circuit à onde de surface.

Ce corrélateur 28 est réalisé de manière connue en soi pour produire un signal codé qui préférablement selon l'invention est un code de BARKER à treize éléments de valeur +1 ou -1, ce code correspond en fait à la séquence 11111-1-111-11-11.

Il permet d'obtenir un pic de corrélation de valeur 1 pour une ondulation de 1/13 lors de sa détection par un filtre transverse, lorsque les coefficients du filtre correspondent à la séquence indiquée ci-dessus.

La modulation en phase qui est mise en oeuvre est une modulation à 0 ou 180° avec surmodulation en cosinus surélevé qui permet une réduction de spectre en conformité avec les normes en la matière.

Les sauts de phase s'y effectuent lorsque la valeur du signal est nulle.

Le signal apparaissant sur l'antenne d'émission 29 à laquelle est reliée le corrélateur 28 se présente sous la forme d'une sinusoïde haute fréquence modulée en amplitude de la manière évoquée ci-dessus et dont l'enveloppe comporte treize périodes de modulation à chaque émission. La cadence d'émission est fonction de l'étendue du champ d'adresse des badges et de la vitesse de modulation choisie, il est possible d'obtenir de très courtes durées d'émission par exemple de l'ordre de la microseconde pour une interrogation de badge par l'émetteur de l'interrogateur.

Les badges 0 sont de constitution identique et comportent chacun un support de type carte de crédit comportant une antenne hyperfréquence 30, constituée par exemple par une zone conductrice de forme appropriée usuelle en ce domaine qui est imprimée sur le support, pour la réception de codes d'interrogation, tels qu'évoqués ci-dessus, et l'émission d'un code individuel d'identification par voie hyperfréquence.

Ils comportent aussi chacun un circuit à onde de surface regroupant deux lignes à retard 31 et 32 en série, la première servant uniquement de tampon vis-à-vis de la seconde qui sert de codeur d'adresse individuelle pour le badge.

La ligne tampon 31 est relié à l'antenne 30 du badge, elle a pour objet de retarder la transmission, à la seconde ligne à retard, des signaux hyperfréquences reçus par le badge et ce pendant un temps au moins égal à la durée nécessaire à l'émission du profil d'excitation que constitue un code d'interrogation BARKER par un interrogateur 23.

La ligne à retard 32 sert de codeur d'émission, elle est de type filtre en peigne à pas constant et comporte des électrodes de sortie qui sont reliées ou non à l'antenne 30 du badge, via un sommateur commun 33 et ce d'une manière spécifique représentative de l'adresse du badge 0; l'ensemble formé par cette ligne à retard 32 et par ses connexions a ici une structure comparable à celle du corrélateur 28, tout en ayant une fonction différente, puisqu'il y a sommation mais pas corrélation au niveau des badges.

Le pas du filtre est choisi au moins égal au temps bit mis en oeuvre pour la génération du profil d'excitation par l'identificateur 23.

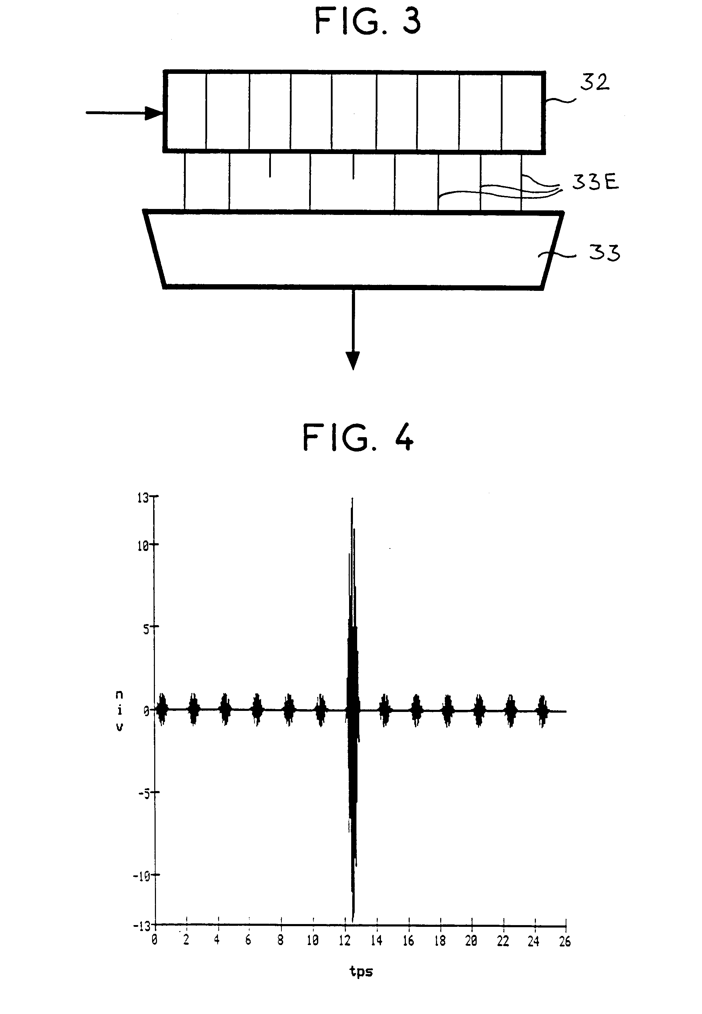

L'exemple théorique de la figure 3 montre que pour faciliter la lecture d'adresse de chaque badge, les positions extrêmes des électrodes de la ligne 32 servant de codeur sont utilisées en tant que bits de départ et d'arrêt, les électrodes intermédiaires servent à l'adressage proprement dit, comme le symbolise la présence ou l'absence de raccordement des électrodes 33E au sommateur commun 33, l'adresse représentée correspondant à un code binaire 1010111 précédé d'un bit de départ, suivi d'un bit d'arrêt, tous deux de valeur 1. Suite à la réception d'un code BARKER d'interrogation, un badge émet donc un signal hyperfréquence qui, à chaque temps de bit significatif, correspond à la somme des signaux alors présents sur toutes les électrodes de la ligne à retard 332 qui sont reliées au sommateur 33 du badge considéré et ce pendant le temps nécessaire au transit du code d'interrogation correspondant au long de cette ligne à retard 32.

Le signal hyperfréquence d'identification réémis par un badge illuminé par un interrogateur 23 est destiné à être capté par le récepteur d'identification 24 associé à cet interrogateur. A cet effet, ce récepteur d'identification 24 comporte une antenne réceptrice 34 qui est éventuellement confondue avec l'antenne d'émission 29 et qui est reliée à une entrée d'un corrélateur 35, identique au corrélateur 28 de l'interrogateur 23.

Le corrélateur 35 attaque un circuit détecteur d'enveloppe 36, via un amplificateur 37 et le détecteur d'enveloppe est connectée en entrée d'une ligne à retard 38 formant registre pour l'ensemble de commande 25 du radio-identificateur considéré.

Si un code d'interrogation est émis par l'interrogateur 23 et qu'il n'y a pas de badge approprié susceptible de répondre, le signal reçu par le récepteur d'identification 24 se traduit par un signal modulé en amplitude en sortie du corrélateur 35, qui se présent sous une forme telle que montrée sur la figure 4 .

Ce signal comporte un pic central d'ondulation qui correspond au signal obtenu, lorsque le code d'interrogation a été entièrement reçu et est contenu en totalité dans les éléments constitutifs successifs de la ligne à retard que comporte le corrélateur 35, les faibles ondulations précédant ou suivant ce pic étant produites lorsque les bits du code ne sont pas ou ne sont plus correctement positionnés dans le corrélateur 35.

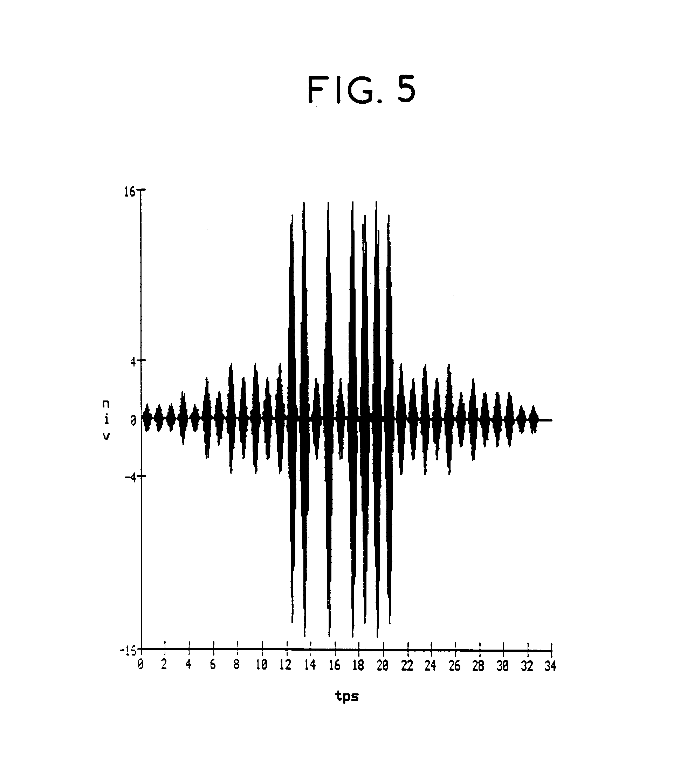

Le signal hyperfréquence d'identification capté par un récepteur d'identification 24, en provenance d'un badge illuminé par l'interrogateur associé à ce récepteur, se traduit en sortie du corrélateur 35 par un signal dont l'allure est montrée en figure 5.

Ce signal comporte initialement une succession d'ondulations de faible amplitude correspondant aux éléments du signal hyperfréquence produits par le badge préalablement à la première corrélation constatée qui se traduit par un premier pic d'amplitude en sortie de corrélateur 35 et qui correspond à l'action due à la première des connexions d'adresse que comporte la ligne à retard 32 servant de codeur au badge répondeur.

Les pics d'amplitude suivants du signal de sortie du corrélateur 35 qui traduisent autant d'autres corrélations constatées, sont dus aux actions individuelles et successives des autres connexions d'adresse au long de la ligne à retard 32 du badge considéré.

L'adresse du badge ayant émis le signal reçu par le corrélateur 35 qui est révélée par le corrélateur 35 est ensuite temporairement mémorisée dans la ligne à retard 38 aux fins d'exploitation par le processeur 39 à un port P duquel sont reliées les sorties de cette ligne à retard 38, le bit de départ reçu en premier étant exploité pour déclencher par exemple une interruption de prise en compte IT auprès du processeur 39, lorsque l'adresse est entièrement mémorisée.

## Revendications

1. Système de radio-identification d'êtres ou d'objets munis de badges identificateurs de type répondeur, caractérisé en ce qu'il comporte au moins un interrogateur (23), doté d'un émetteur hyperfréquence produisant des interrogations constituées chacune par un signal modulé par un code de BARKER, une pluralité de badges d'identification ($0_A$, $0_B$, $0_C$), de type répondeur, exploitant l'énergie transmise par un signal, modulé par un code de BARKER, reçu d'un interrogateur pour émettre chacun un code de réponse hyperfréquence individuel transposé du signal modulé reçu, au moins un récepteur d'identification (24), apte à décoder par corrélation les codes de réponse hyperfréquence individuels des badges.

2. Système de radio-identification à badges répondeurs, selon la revendication 1, caractérisé en ce qu'il comporte un interrogateur (23), associant un générateur d'excitation (27) à fréquence fixe à un corrélateur (28), réalisé sous forme d'un filtre à peigne constitué par un circuit à onde de surface, pour produire répétitivement un même signal modulé par un code de BARKER et pour émettre ce signal par l'intermédiaire d'une antenne (29).

3. Système de radio-identification à badges répondeurs, selon la revendication 1, caractérisé en ce qu'il comporte des badges répondeurs hyperfréquence ($0_A$, $0_B$, $0_C$) comportant chacun une ligne à retard (32), de type filtre en peigne à pas constant, qui est reliée d'une part par une entrée à une antenne d'émission et de réception hyperfréquence (30) portée par le badge et d'autre part, à un sommateur (33) par certaines de ses électrodes de sortie (33E) qui définissent ainsi une adresse pour le badge, ledit sommateur étant lui-même relié par sa sortie à l'antenne de manière à émettre un signal hyperfréquence codé, représentatif du badge, à partir de l'énergie transmise par un signal d'interrogation déterminé, du type signal hyperfréquence modulé par un code de BARKER, lorsqu'un tel signal est capté par l'antenne du badge.

4. Système de radio-identification à badges répondeurs, selon la revendication 3, caractérisé en ce que chaque badge répondeur comporte de plus une ligne à retard (31) placée en tampon entre l'antenne (30) du badge et l'entrée de la ligne à retard (32) servant de codeur pour retarder l'émission du badge en réception d'un code d'interrogation d'un temps au moins égal à la durée d'émission d'un tel code d'interrogation.

5. Système de radio-identification à badges répondeurs, selon la revendication 4, caractérisé en ce que chaque badge, qui est de type carte accréditive et qui porte une antenne hyperfréquence (30) formée par une zone conductrice portée par la carte, contient deux lignes à retard (31, 32) réalisées sous forme d'un circuit à onde de surface.

6. Système de radio-identification à badges répondeurs, selon la revendication 1, caractérisé en ce qu'un récepteur d'identification (24) comporte un corrélateur (35) qui est identique au corrélateur (28) d'un interrogateur (23) associé à ce récepteur en un même radio-identificateur et dont l'entrée est reliée à une antenne réceptrice de ce radio-identificateur (34) de manière à traduire les corrélations qu'il constate dans un signal hyperfréquence codé reçu d'un badge en un signal représentatif de de ce badge.

7. Système de radio-identification à badges répondeurs, selon la revendication 6, caractérisé en ce que le récepteur d'identification (24) comporte un circuit détecteur d'enveloppe (36), relié par son entrée au corrélateur (35) du récepteur et par sa sortie à une ligne à retard (38) formant registre d'identification pour un ensemble de commande (25) du système.

8. Système de radio-identification à badges répondeurs, selon au moins l'une des revendications 1 à 7, caractérisé en ce que les unités constitutives que constituent un identificateur (23) et un récepteur d'identification (24) comportent respectivement des corrélateurs (28, 35) pour code de BARKER réalisés sous forme de filtres à peigne constitués par des circuits à onde de surface et en ce que les badges comportent chacun un codeur d'émission (32, 33) à base de ligne à retard qui a même structure que lesdits corrélateurs.

9. Interrogateur pour système de radio-identification, selon la revendication 1, caractérisé en ce qu'il comporte des moyens (27,28,29) pour produire et émettre une interrogation constituée par un signal hyperfréquence modulé par un code de BARKER.

10. Interrogateur selon la revendication 9, caractérisé en qu'il comporte un générateur d'excitation (27) à fréquence fixe associé à un corrélateur (28), réalisé sous la forme d'un filtre à peigne lui-même constitué par un circuit à onde de surface, qui est relié à une antenne directive d'émission (29) pour produire répétitivement une même interrogation constituée par un signal hyperfréquence modulé par un code de BARKER.

**11.** Récepteur d'identification pour système de radio-identification, selon la revendication 1, caractérisé en ce qu'il comporte un circuit détecteur d'enveloppe (36) relié par son entrée à un corrélateur (35) pour code de BARKER, réalisé sous forme d'un filtre à peigne constitué par un circuit à onde de surface, et par sa sortie à une ligne à retard (38) formant registre d'identification.

**12.** Agencement exploitant, de type serveur d'application, caractérisé en ce qu'il est doté d'un système de radio-identification comportant au moins un interrogateur (23), ayant un émetteur hyperfréquence produisant des interrogations constituées chacune par un signal modulé par un code de BARKER, une pluralité de badges d'identification ($0_A$, $0_B$, $0_C$), de type répondeur, exploitant l'énergie transmise par un signal, modulé en code de BARKER, reçu d'un interrogateur pour émettre chacun un code de réponse hyperfréquence individuel transposé du signal modulé reçu, au moins un récepteur d'identification (24), apte à décoder par corrélation les codes de réponse hyperfréquence individuels des badges, ledit agencement (26) exploitant les informations d'identification obtenues par le système de radio-identification qui lui sont fournies par l'intermédiaire d'un ensemble de commande (25) de ce système, via une liaison de transmission (40) aboutissant à son propre ensemble de commande (41).

**13.** Agencement exploitant selon la revendication 12, constitué par une installation téléphonique de type intercommunication ou commutateur numérique à intégration de services caractérisé en ce qu'il reçoit les informations fournies par le système de radio-identification de manière à connaître en temps réel la localisation d'au moins certains des abonnés téléphoniques, porteurs de badge ($0_A$), desservis par l'installation pour assurer les fonctions de recherche de personne et/ou pour transférer les communications qui leur sont destinées au poste ou terminal téléphonique (42, 43), auprès duquel chacun est alors localisé.

**15.** Agencement exploitant selon la revendication 14, caractérisé en ce qu'il est agencé pour assurer le transfert des facilités spécifiques correspondant à la catégorie d'un abonné de l'installation téléphonique, qui classiquement sont rattachées au poste ou terminal habituel de cet abonné dans l'installation, au poste ou terminal auprès duquel cet abonné est temporairement situé, à l'occasion d'un appel par voie téléphonique pour ou par cet abonné, par combinaison des possibilités des unités de commande du système de radio-identification et de commutation de l'installation téléphonique.

# FIG. 1

FIG. 2

EP 0 468 366 A1

# FIG. 3

# FIG. 4

# FIG. 5

# RAPPORT DE RECHERCHE EUROPEENNE

Numéro de la demande

**EP 91 11 2024**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 096 477  (EPSTEIN et al.)<br>* Document entier *<br>– – – | 1-15 | G 01 S 13/02 |
| A | US-A-4 725 841  (NYSEN et al.)<br>* Figures 2,6-10; colonne 4, ligne 60 - colonne 6, ligne 34; colonne 8, ligne 66 - colonne 10, ligne 33 *<br>– – – – – | 1-15 | |

**DOMAINES TECHNIQUES RECHERCHES (Int. Cl.5)**

G 01 S

**Le présent rapport de recherche a été établi pour toutes les revendications**

| Lieu de la recherche | Date d'achèvement de la recherche | Examinateur |
|---|---|---|
| La Haye | 26 août 91 | ANDERSEN J.G. |